# EUROPÄISCHE PATENTANMELDUNG

(11) **EP 0 710 793 A1**
(43) Veröffentlichungstag der Anmeldung: **08.05.1996**
(21) Anmeldenummer: 95116209.8
(22) Anmeldetag: 13.10.1995
(51) Int. Cl.: F16L 33/207

(54) **Rohrverbindung mit Entlastungsnuten**

(30) Priorität: 04.11.1994 DE 9417646 U
(71) Anmelder: Seppelfricke Armaturen GmbH & Co., D-45881 Gelsenkirchen (DE)
(72) Erfinder: Seltenheim, Volker, Dr., D-44287 Dortmund (DE); Land, Ulrich, D-45881 Gelsenkirchen (DE); Kolbe, Eduard, D-45881 Gelsenkirchen (DE)
(74) Vertreter: Hosbach, Hans Ulrich

(57) **Zusammenfassung**

Die Rohrverbindung umfaßt eine Verbindungshülse (1), die einen umlaufenden Dichtwuls (5) zur Aufnahme eines Dichtrings (7) aufweist. Ferner umfaßt sie eine Stützhülse (2) mit einem Flansch (4), dessen Außendurchmesser an den Innendurchmesser der Verbindungshülse (1) angepaßt ist. Zwischen der Verbindungshülse (1) und der Stützhülse (2) ist ein Kunststoffrohr (3) verpreßt. Vor dem Verpressen entspricht der Außendurchmesser der Stützhülse (2) dem Innendurchmesser des Kunststoffrohrs (3) und der Innendurchmesser der Verbindungshülse (1) dem Außendurchmesser des Kunststoffrohres (2). Wenn Kunststoffrohre mit unterschiedlichem Außendurchmesser verarbeitet werden, soll der Außendurchmesser der Verbindungshülse (1) aus werzeugtechnischen Gründen von konstantem Durchmesser sein. Die Dicke der Verbindungshülse (1) kann also relativ groß werden. Zur Kompensation dieses Effektes sind beidseitig neben dem Dichtwulst (5) Entlastungsnuten (8) vorgesehen, die ein zuverlässiges Verpressen von Kunststoff- und Mehrschichtverbundrohren gewährleisten, auch wenn diese einen relativ geringen Außendurchmesser haben und die Verbindungshülse (1) entsprechend dick ist.

## Beschreibung

Die Erfindung betrifft eine Rohrverbindung zum Anschluß an Kunststoff- und Mehrschichtverbundrohre unterschiedlicher Außendurchmesser, mit einer plastisch verformbaren Verbindungshülse, die mindestens einen umlaufenden Dichtwulst mit einer Innennut zur Aufnahme eines Dichtrings aufweist, und mit einer Stützhülse, deren Außendurchmesser an den Innendurchmesser des jeweiligen Rohres angepaßt ist, während der Außendurchmesser ihres Flansches dem Innendurchmesser der Verbindungshülse entspricht.

Bei derartigen Rohrverbindungen wird die Verbindungshülse, die auch unter der Bezeichnung Pressfitting am Markt bekannt ist, durch Radialkräfte derart plastisch verformt, daß das jeweilige Rohr zwischen der Verbindungshülse und der Stützhülse zuverlässig eingespannt wird. Dabei besteht die Forderung, unabhängig von den unterschiedlichen Außendurchmessern der Kunststoff-Rohre immer ein und denselben zangenförmigen Werkzeugsatz zum Verpressen der Verbindungshülse benutzen zu können. Es handelt sich dabei um einen ohnehin vorhandenen Werkzeugsatz, wie man ihn zum Verpressen von Fittings für ein Metallrohr verwendet, wobei letzeres allerdings eine andere Nennweite besitzen kann.

Eine Rohrverbindung der eingangs genannten Art ist aus dem DE-GM 9316 390.8 bekannt. Dort wird eine Stützhülse verwendet, deren Flansch einen Außendurchmesser hat, der dem größten zu erwartenden Außendurchmesser der Rohre entspricht. Bei Rohren mit geringerem Außendurchmesser wird eine Überbrückungshülse zwischen das Rohr und die Verbindungshülse geschoben.

Der Erfindung liegt die Aufgabe zugrunde, die bekannte Rohrverbindung zu vereinfachen und leichter montierbar zu machen.

Diese Aufgabe wird erfindungsgemäß dadurch gelöst, daß der Innendurchmesser der Verbindungshülse an den Außendurchmesser des jeweiligen Rohres angepaßt ist und daß auf derjenigen Seite neben jedem Dichtwulst, auf der eine Verpressung der Verbindungshülse stattfindet, eine Entlastungsnut in der Außenfläche der Verbindungshülse vorgesehen ist.

Bei dieser Rohrverbindung wird die bei der bekannten Konstruktion unerläßliche Überbrückungshülse eingespart. Dadurch vermindert sich die Zahl der erforderlichen Einzelteile, was nicht nur die Lagerhaltung, sondern auch die Montage vereinfacht.

Ein wesentlicher weiterer Vorteil liegt darin, daß die Verformung der Überbrückungshülse entfällt. Dies vermindert die für die Verpressung erforderlichen Radialkräfte.

Bei Rohren mit relativ kleinen Außendurchmessern erhöht sich die Wandstärke der zu verformenden Verbindungshülse, und zwar in der Größenordnung von etwa 0,5 bis 0,75 mm. Dies wirkt sich insbesondere im Bereich des umlaufenden Dichtwulstes aus. Zur Kompensation dieses Effektes dienen die vorzugsweise beidseitig neben dem Dichtwulst vorgesehenen Entlastungsnuten. Sie erleichtern die Umformung der Verbindungshülse und gewährleisten eine höhere Umformung sowie eine geringere Rückfederung. Das Rohrmaterial kann mit vergleichsweise kleiner Kraft radial oder unter mehrkantiger Formgebung stark zusammengedrückt werden, wobei das Material der Verbindungshülse hinter den Flansch der Stützhülse greift und hier eine formschlüssige Verriegelung zwischen der Verbindungshülse und der Stützhülse bewirkt. Die Rohrverbindung ist also in hohem Maße zugfest.

Zur besseren Einbindung der Rohre wird vorgeschlagen, in der Außenfläche der Stützhülse Nuten vorzusehen, in die das Rohrmaterial beim Verpressen hineinwandert. Die Gestaltung und Tiefe der Nuten werden so gewählt, daß eine Verletzung der Rohrinnenfläche ausgeschlossen ist.

Dabei ist es besonders vorteilhaft, in mindestens einer der Nuten einen Dichtring anzuordnen. Dieser erhöht nicht nur die Dichtheit der Verbindung, sondern verhindert auch, daß das Medium zwischen der Stützhülse und dem Rohr bis zu dessen Stirnseite vordringt. Dies ist von besonderer Bedeutung bei Mehrschichtverbundrohren, die eine korrosionsempfindliche metallische Armierung aufweisen.

Eine weitere vorteilhafte Maßnahme in dieser Richtung besteht darin, daß der Flansch der Stützhülse in seiner Außenfläche eine Nut zur Aufnahme eines Dichtrings aufweist. Dadurch wird auch auf der Flanschseite der Stützhülse für eine zusätzliche Abdichtung gesorgt.

Schließlich wird in Weiterbildung der Erfindung vorgeschlagen, daß die Stützhülse benachbart ihres Flansches einen Dichtring trägt. Dieser verhindert eine Berührung zwischen der Stirnfläche des Rohres und der zugehörigen Seitenfläche des Stützhülsenflansches. Damit wird bei Mehrschichtverbundrohren auch eine Kontaktkorrosion zwischen der metallischen Rohrseele und der Stützhülse verhindert.

Die Erfindung wird im folgenden anhand bevorzugter Ausführungsbeispiele im Zusammenhang mit der beiliegenden Zeichnung näher erläutert. Die Zeichnung zeigt in:
Fig. 1 einen axialen Teilschnitt durch eine Rohrverbindung vor dem Verpressen;
Fig. 2 die Rohrverbindung gemäß Figur 1 nach dem Verpressen,
Fig. 3 eine abgewandelte Ausführungsform, wiederum vor dem Verpressen.

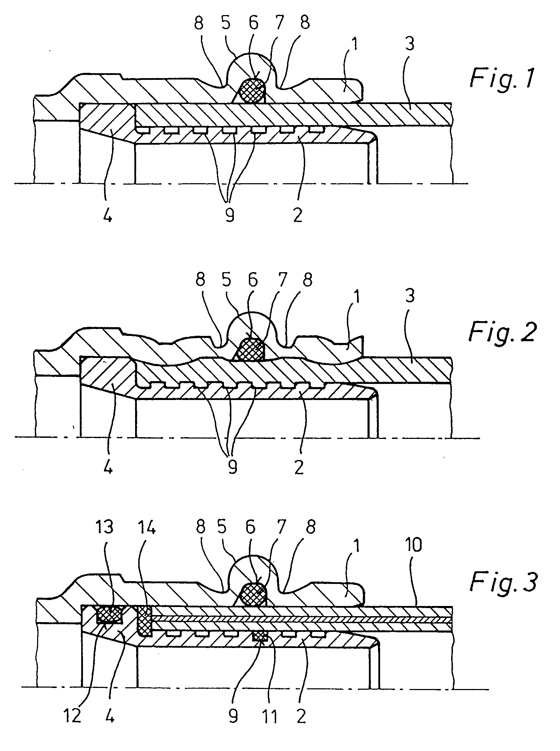

Die Rohrverbindung nach Figur 1 weist eine plastisch verformbare Verbindungshülse 1 auf, in die eine Stützhülse 2 aus starrem Material eingesetzt ist. Zwischen die Verbindungshülse 1 und die Stützhülse 2 ist ein Kunststoffrohr 3 eingesteckt. Der Innendurchmesser der Verbindungshülse 1 ist an den Außendurchmesser des Kunststoffrohres 3 angepaßt, während der Außendurchmesser der Stützhülse 2 an den Innendurchmesser des Kunststoffrohres 3 angepaßt ist. Die Stützhülse 2 ist durch einen Flansch 4 verlängert, der eine Schlauchtülle bildet und dessen Außendurchmesser dem Innendurchmesser der Verbindungshülse 1 entspricht.

Letztere weist ferner einen umlaufenden Dichtwulst 5 mit einer Innennut 6 auf. In der Innennut 6 ist ein Dichtring 7 angeordnet.

Zu jeder Seite des Dichtwulstes 5 verläuft eine Entlastungsnut 8, die die Umformung bei einem Pressvorgang erleichtert sowie eine höhere Umformung und eine geringere Rückfederung gewährleistet. Dies ist dann von Bedeutung, wenn die Verbindungshülse 1 an ein Kunststoffrohr 3 mit kleinem Außendurchmesser angepaßt ist. Der Außendurchmesser der Verbindungshülse 1 bleibt dabei konstant, so daß kein Werkzeugwechsel für das Verpressen erforderlich wird. Dementsprechend erhöht sich die Wandstärke der Verbindungshülse 1, und zwar um 0,5 bis 0,75 mm. Dennoch ermöglichen die Entlastungnuten 8 ein problemloses Verpressen.

Der Zustand nach dem Verpressen ergibt sich aus der Figur 2. Das Werkzeug hat die Bereiche der Verbindungshülse 1 beidseitig des Dichtwulstes 5 plastisch verformt und in das Material des Kunststoffrohres 3 hineingedrückt. Gleichzeitig hat sich das Material der Verbindungshülse 1 hinter den Flansch 4 der Stützhülse 2 geschoben und dort eine formschlüssige Verriegelung bewirkt. Das Material des Kunststoffrohres 3 ist ferner in Nuten 9 hineingewandert, die auf der Außenfläche der Stützhülse 2 ausgebildet sind. Auch dies stellt eine formschlüssige Verbindung mit der Stützhülse 2 her, und zwar ohne Verletzung der Rohrinnenfläche. Schließlich ist auch zwischen der Verbindungshülse 1 und dem Kunststoffrohr 3 eine formschlüssige Verbindung entstanden. Die Zugfestigkeit der Rohrverbindung ist so hoch, daß das Rohr die Streck- oder Fließgrenze erreicht, bevor die Verbindung aufgeht.

Figur 3 zeigt eine abgewandelte Ausführungsform, und zwar, wie Figur 1, vor dem Verpressen. Diese Ausführungsform ist speziell für ein Mehrschichtverbundrohr 10 mit metallischer Armierung vorgesehen. Eine der Nuten 9 der Stützhülse 2 enthält einen Dichtring 11, der ein Eindringen des Mediums zwischen der Stützhülse 2 und dem Mehrschichtverbundrohr 10 verhindert. Ferner weist auch der Flansch 4 der Stützhülse 2 eine Nut 12 zur Aufnahme eines Dichtrings 13 auf. Dieser schirmt den flanschseitigen Bereich zwischen Verbindungshülse 1 und Stützhülse 2 ab. Schließlich ist zwischen den Flansch 4 der Stützhülse 2 und die Stirnseite des Mehrschichtverbundrohres 10 ein Dichtring 14 eingelegt, der eine Berühung zwischen der Stirnfläche des Mehrschichtverbundrohres 10 und der Stützhülse 2 verhindert. Insgesamt erhöht sich die Abdichtung der Rohrverbindung. Darüberhinaus wird die metallische Armierung des Mehrschichtverbundrohres gegen Korrosion und auch gegen Kontaktkorrosion geschützt.

Im Rahmen der Erfindung sind durchaus Abwandlungsmöglichkeiten gegeben. So kann es unter Umständen ausreichen, mit einer einzigen Entlastungsnut 8 zu arbeiten, sofern ein Verpressen nur zur einer Seite des Dichtwulstes stattfindet. Ferner können mehrere Dichtwülste vorgesehen sein, wobei dann jedem Dichtwulst mindestens eine Entlastungsnut zugeordnet wird. Gegebenenfalls kann auf die Nuten 9 in der Stützhülse verzichtet werden.

Die Erfindung ermöglicht es in vorteilhafter Weise, ein Fittingprogramm aufzustellen, daß stufenweise an unterschiedliche Rohrabmessungen angepaßt ist.

## Patentansprüche

1. Rohrverbindung zum Anschluß an Kunststoff- und Mehrschichtverbundrohre (3; 10) unterschiedlicher Außendurchmesser, mit einer plastisch verformbaren Verbindungshülse (1), die mindestens einen umlaufenden Dichtwulst (5) mit einer Innennut (6) zur Aufnahme eines Dichtrings (7) aufweist, und mit einer Stützhülse (2), deren Außendurchmesser an den Innendurchmesser des jeweiligen Rohres (3; 10) angepaßt ist, während der Außendurchmesser ihres Flansches (4) dem Innendurchmesser der Verbindungshülse (1) entspricht,
**dadurch gekennzeichnet,**
daß der Inndurchmesser der Verbindungshülse (1) an den Außendurchmesser des jeweiligen Rohres (3; 10) angepaßt ist und daß auf derjenigen Seite neben jedem Dichtwulst (5), auf der eine Verpressung der Verbindungshülse (1) stattfindet, eine Entlastungsnut (8) in der Außenfläche der Verbindungshülse (1) vorgesehen ist.

2. Rohrverbindung nach Anpruch 1, dadurch gekennzeichnet, daß in der Außenfläche der Stützhülse (2) Nuten (9) vorgesehen sind.

3. Rohrverbindung nach Anspruch 2, dadurch gekennzeichnet, daß mindestens eine der Nuten (9) der Stützhülse (2) einen Dichtring (11) enthält.

4. Rohrverbindung nach einem der Ansprüche 1 bis 3, dadurch gekennzeichnet, daß der Flansch (4) der Stützhülse (2) in seiner Außenfläche eine Nut (12) zur Aufnahme eines Dichtrings (13) aufweist.

5. Rohrverbindung nach einem der Ansprüche 1 bis 4, dadurch gekennzeichnet, daß die Stützhülse (2) benachbart ihres Flansches (4) einen Dichtring (14) trägt.
